# EUROPEAN PATENT APPLICATION

(11) **EP 0 551 195 A1**
(43) Date of publication of application: **14.07.1993**
(21) Application number: 93300094.5
(22) Date of filing: 07.01.1993
(51) Int. Cl.: H01H 9/08, H02K 5/22

(54) **An electrical switch and motor**

(30) Priority: 07.01.1992 GB 9200196; 13.07.1992 GB 9214868; 03.12.1992 GB 9225259
(71) Applicant: BML ENTERPRISES LTD., Neath, West Glamorgan SA11 1NE (GB)
(72) Inventor: Bannister, Leslie George, West Glamorgan, (GB); Thomas, David Michael,, West Glamorgan, (GB)
(74) Representative: Gibson, Stewart Harry

(57) **Abstract**

A switch comprises an enclosure having a base portion 21 and a removable cover portion 21. Terminals 35, 62 are provided in the base and cover portions 21, 22 for respectively connecting to an electrical appliance e.g. a motor 10 and to an electrical supply. Movable contact elements 31 can be extended from the base portion 21 to the cover portion 22 when the cover portion 22 is fitted to the base portion 21 in order to make an electrical connection between the terminals 35, 62.

In use with a motor 10 the enclosure 20 is mounted to a terminal box 16 which is provided on the motor's casing 15.

## Description

This invention relates to a switch and to a motor, and in particular to a motor with an arrangement for a switch or other electrical device.

Motors are widely used in factories, and if a motor fails or needs to be replaced, then safety regulations require an electrician to disconnect the electrical supply from the motor: a mechanic is needed to remove the motor from the machinery. It is expensive to employ a number of workers each having different skills, and employers nowadays tend to require their workers to perform multiple-skills. It is dangerous however for a mechanic, who is not also a qualified electrician, to connect appliances to or disconnect them from the electrical supply.

We have now devised a switch which enables persons who are not qualified electricians to connect electrical appliances to or disconnect them from a supply.

In accordance with this invention as seen from a first aspect there is provided a switch comprising an enclosure having a base portion and a removable cover portion, the switch further comprising terminals in said base and cover portions for respectively connecting to an electrical appliance and an electrical supply, contact elements extending between the base portion and the cover portion when the cover portion is fitted to the base portion, and an actuator for selectively making or breaking an electrical connection between the terminals in the base portion and the terminals in the cover portion via the contact elements.

In use, the base portion may be mounted on an electrical appliance e.g. a motor and the cover portion connected to e.g. a three-phase electrical supply. If it is desired to remove the motor, then the supply to the motor may be turned off using the actuator of the switch and then the cover portion is separated from the base portion so that the motor can be removed: this operation does not require any electrical skills and thus obviates the need for a qualified electrician.

Preferably the switch comprises means for concealing the contact elements inside the base or inside cover portions when said two portions are separated, so as to prevent possibly live contact elements from being accidentally touched. Alternatively the actuator may be arranged to disconnect the contact elements from the terminals in the cover portion when the two portions are separated.

Preferably means are provided for mechanically locking the cover portion to the base portion when the electrical connection is made between the terminals in the base portion and the terminals in the cover portion, so that the cover portion cannot be separated from the base portion until this electrical connection is broken.

Preferably the contact elements are movable by the actuator between an inactive position and an active position in which they interconnect the terminals in the base portion and the terminals in the cover portion.

Preferably the contact elements comprise arms pivotally mounted to the base portion and arranged to extend from the base portion when in their active position.

Preferably the cover portion is provided with a spring-loaded flap which conceals the terminals in the cover portion when it is separated from the base portion, so as to prevent the live terminals from being accidentally touched by the user.

Preferably the base portion is provided with a spring-loaded flap which conceals its terminals when the cover portion is removed, so as to prevent the ingress of dirt and dust into the base portion.

The Institute of Electrical Engineers' Wiring Regulations now require that all electrical motors are provided with a local isolator or switch. These devices allow the supply to the motor to be shut-off e.g. when a person becomes entangled in the motor.

It is known to mount local isolators adjacent the motor, but it is often difficult to find a suitable location where they can be mounted.

We have now devised an improved motor which alleviates the above mentioned problems.

In accordance with this invention as seen from a second aspect, there is provided a motor having a terminal box on its casing and an enclosure for housing a local isolator or other electrical device, the enclosure being mounted on the terminal box.

Preferably the enclosure is mounted on the terminal box by screws which engage with screw-threaded bores formed in the terminal box.

Preferably the enclosure has a base provided with a panel which can be removed or knocked out so as to interconnect the interior of the enclosure with the interior of the terminal box.

Preferably the enclosure comprises a removable lid or cover.

Preferably an aperture is formed in the enclosure to provide a cable entry port. A plug may be provided to seal off the aperture when not in use.

Preferably the enclosure comprises brackets for mounting a rail inside the enclosure. A local isolator or other electrical device may be mounted on the rail and an aperture is preferably formed in the enclosure for receiving a control actuator of the isolator or other electrical device. Alternatively the local isolator or other electrical device may be mounted directly to an aperture formed in enclosure, e.g. in a lid of the enclosure.

Preferably a seal is disposed between the enclosure and the terminal box.

Embodiments of this invention will now be described by way of examples only and with reference to the accompanying drawings, in which:
Figure 1 is a perspective view of a conventional motor;
Figure 2 is a perspective view of a motor provided with a local isolator in accordance with the invention;
Figure 3 is an exploded view of the local isolator of Figure 2;
Figure 4 is an exploded view of the cover portion of the local isolator of Figure 2;
Figure 5 is a sectional view through the local isolator of Figure 2;
Figure 6 is a perspective view of the local isolator of Figure 2, with some parts shown cut-away;
Figure 7 is a perspective view of portions of the local isolator of Figure 2; and
Figure 8 is a perspective view of a motor provided with an enclosure for a local isolator in accordance with the invention; and
Figure 9 is a perspective view of the enclosure of Figure 7 with some parts shown cut-away.

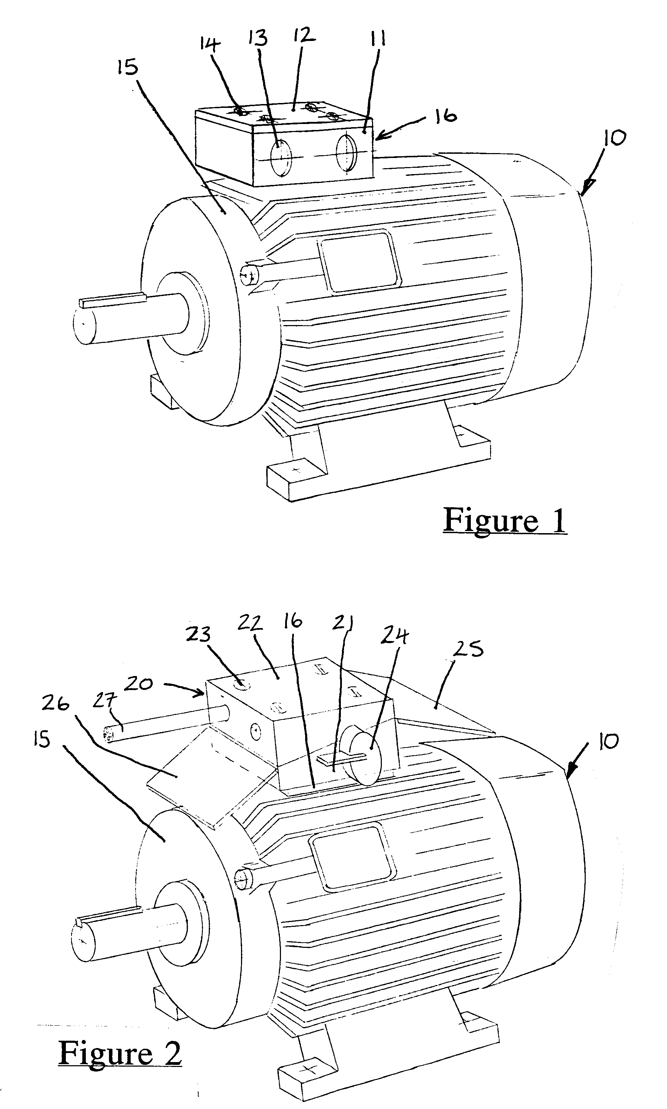

Referring to Figure 1 of the drawings, there is shown a conventional motor 10 comprising a cylindrical metal casing 15 and a terminal box 16 formed integrally with the casing. The terminal box 16 houses electrical terminals connected to the armature and windings of the motor 10. A plurality of cable entry ports e.g. 13 are formed in the terminal box 16 so that an external electrical supply can be connected to the terminals inside the terminal box 16. A metal lid 12 is fixed to the base 11 of the terminal box by screws 14. Hitherto local isolators have been connected in series with the supply cable leading to the terminal box 12, and located alongside or near to the motor.

Referring to Figure 2, there is shown a motor 15 having an electrical isolator 20 mounted to its terminal box 16. The isolator 20 comprises an enclosure having a base portion 21 and a removable cover portion 22 attached to the base portion 21 by screws 23.

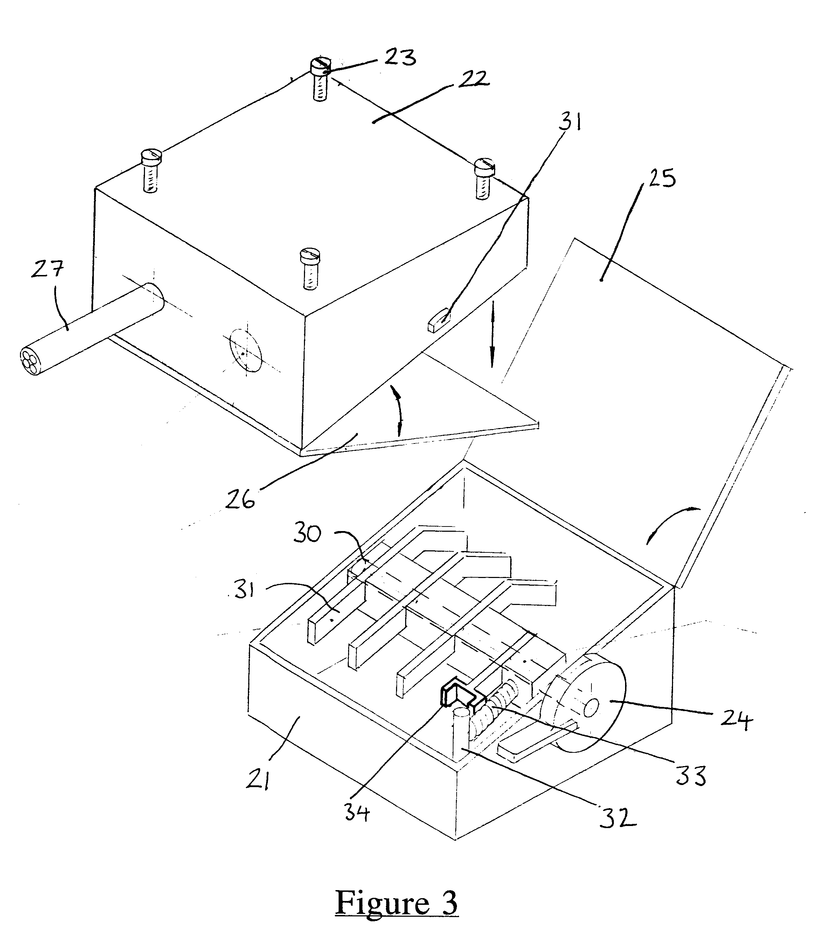

Referring to Figure 3, an isolator mechanism is mounted in the base portion 21 of the enclosure. The isolator mechanism comprises a rotary shaft 30 having its opposite ends journalled in the opposite side walls of the base portion 21 of the enclosure. The shaft 30 supports three radially projecting contact arms 31 and a bifurcated control arm 34. A manual actuator 24 is connected to one end of the shaft 30 for rotating the shaft about its axis between an inactive position, which is shown, and an active position.

A spring 33 provides an over-centre action to bias either these two positions. An earth contact 32 projects upwardly from the base portion 21. A spring-loaded flap 25 is hinged to the base portion 21 for closing its top when the cover 22 is removed. The cover portion 22 comprises a similar spring-loaded flap 26 which closes its underside when the cover portion 22 is not fitted to the base portion 21. A projection 31 on the side of the cover portion co-operates with the actuator 24 on the base portion, such that when the actuator 34 is rotated in the clockwise direction to its active position, the cover portion 22 cannot be removed from the base portion 21.

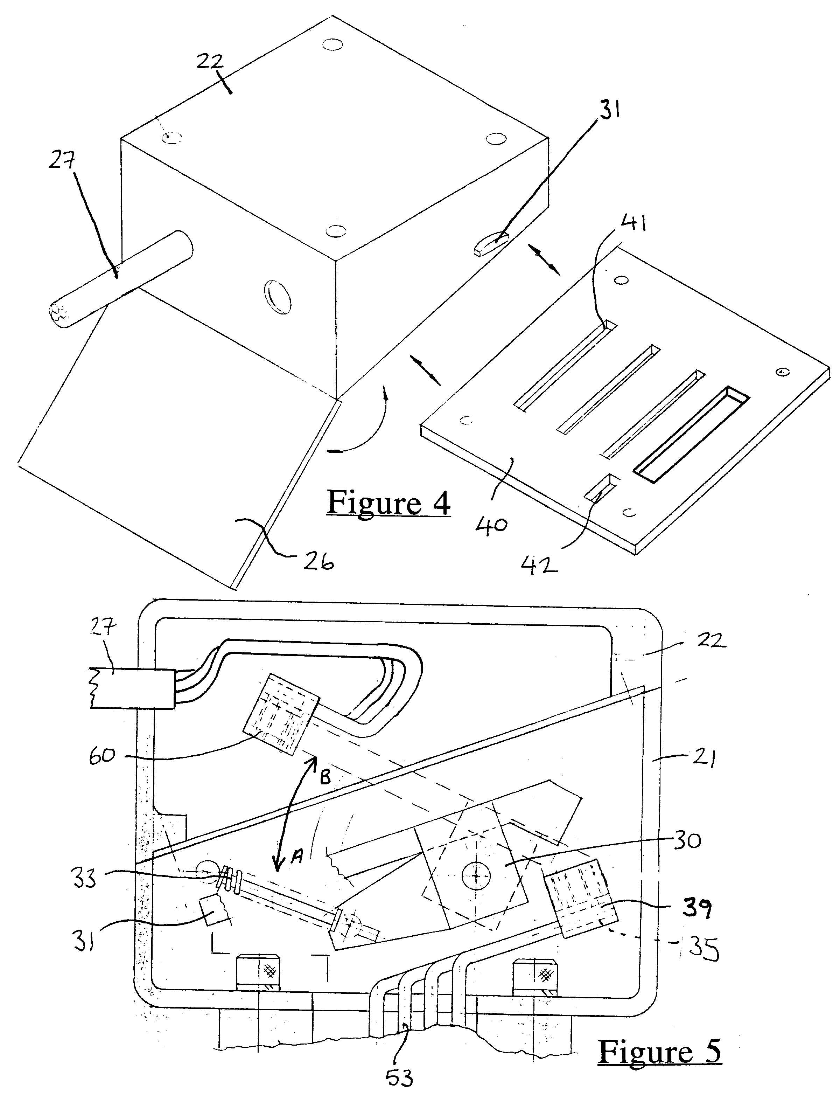

As shown in Figure 4, a baseplate 40 is fitted to the underside of the cover portion 22, the baseplate 40 having a plurality of elongate slots e.g. 41 and an aperture 42.

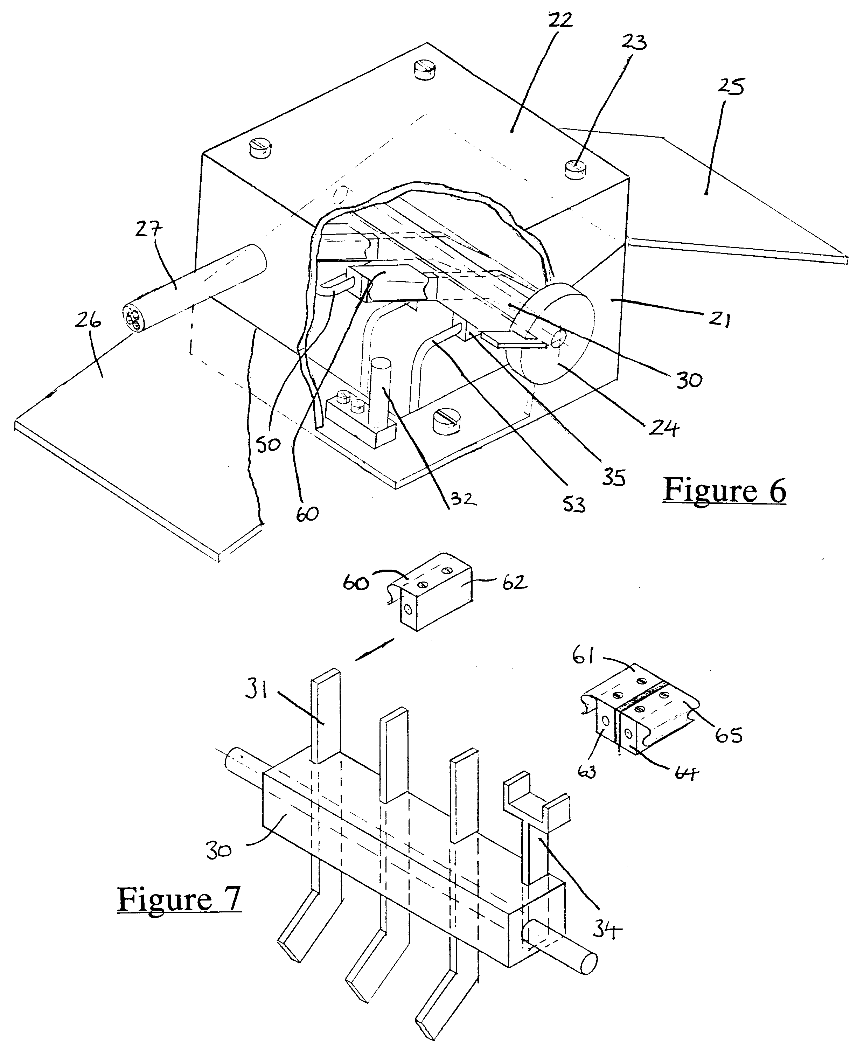

Referring to Figures 5 to 7, the electrical terminals inside the terminal box 16 of the motor are connected to terminals 35 inside the base 21 of the isolator via wires 53. The terminals 35 have respective spring contacts 39 fixed to them, arranged for engagement by the ends of respective contact arms 31 when the actuator 24 is rotated in the clockwise direction to its active position B. The opposite ends of the contact arms 31 engage spring contacts e.g. 60 mounted in the cover portion 22 when the actuator is rotated to its active position B. The contacts 60 are fixed to terminals 62 which are connected to respective conductors 50 of the electrical supply cable 27. A pair of insulated terminals 63, 64 are connected to control wires and are provided with respective spring contacts 61, 65 which are arranged for engagement by respective portions of the bifurcated control arm 34.

In use, the terminals 62 in the cover portion 22 are connected to the electrical supply: the baseplate 40 fitted to the underside of the cover portion 22 prevents the live terminals being touched accidentally by the user. In order to fit the cover portion 22 to the base portion 21, the spring loaded flaps 25, 26 must be opened, and then the cover portion 22 is secured in place by the screws 23.

The actuator 24 can then be rotated in the clockwise direction in order to make an electrical connection between the electrical supply 27 and the motor 10. The contact arms 31 project through the slots 41 in the baseplate 40 and engage with the contacts 60 in the cover portion 22. The control arm 34 also makes an electrical connection between the two control terminals 63, 64. The earth terminal 32 projects through the aperture 42 and engages with a contact (not shown) to which an earth conductor of the electrical supply may be connected.

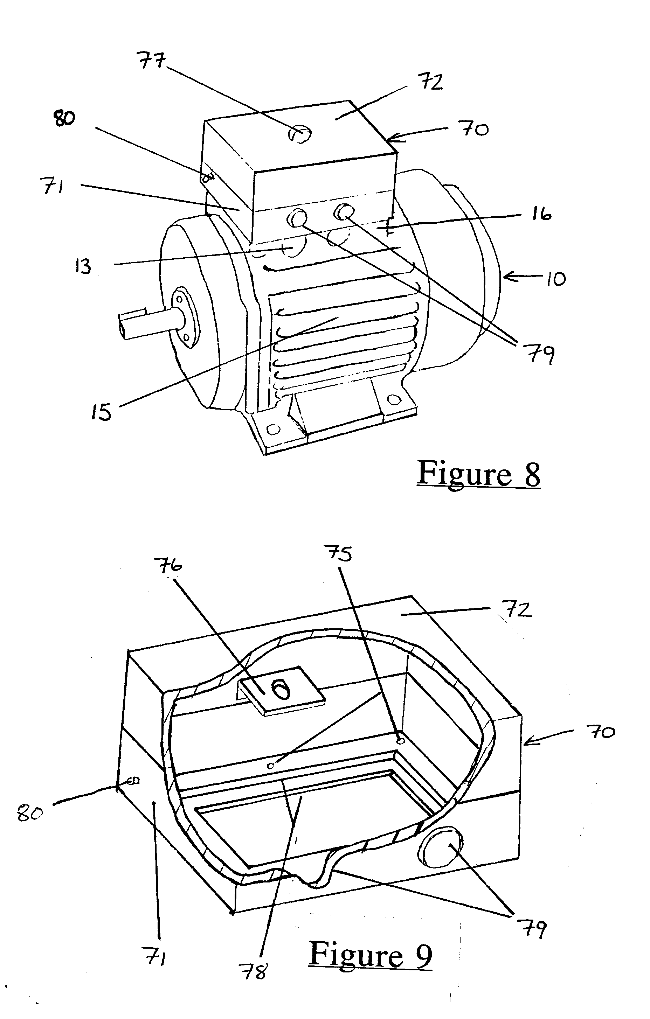

In the embodiment of Figures 8 and 9, an enclosure 70 is mounted to the terminal box 16 of the motor 10. The enclosure 70 comprises a base 71 and a lid 72. A plurality of portions 75 of the base 71 are formed so that they can knocked-out in order to provide mounting holes. These mounting holes correspond with the screw holes for the lid 12 of the terminal box 16 so that the enclosure 70 can be mounted to the terminal box 16 in place of its lid 12. Panels 78 are formed in the base of the enclosure 71 and can be knocked-out to allow wires to pass from the enclosure 70 to the terminal box 16. A seal (not shown) is preferably provided between the enclosure 70 and the terminal box 16, e.g. a rubber gasket. A similar seal may be provided between the base and lid 72 of the enclosure.

The lid 72 is provided with a pair of L-shaped brackets 76, which can be used to support a horizontal metal rail (not shown). A local isolator (not shown) can be mounted on the rail such that its actuating button projects through an aperture 77 formed in the lid 72 of the enclosure.

Apertures 79 are formed in the side of the base 71 to provide cable entry ports to the enclosure 70, and blanking plugs (not shown) are provided to seal off the apertures 79 when not in use.

The wires between the isolator and the motor terminals are housed inside the enclosure 70, and a terminal 80 may be formed on the exterior of the enclosure for connection to the electrical earth.

In an alternative arrangement, the local isolator may be mounted directly to the aperture 77 in the lid 72 of the enclosure by a screw-threaded shaft on the local isolator.

The base portion 21 of the isolator shown in Figures 1 to 6 is preferably provided with knock-out panels and holes so that it can be mounted on the terminal box of a conventional motor as shown in Figure 2.

## Claims

**1)** A switch comprising an enclosure having a base portion (21) and a removable cover portion (22) characterised in that the switch further comprises terminals in the base and cover portions (35, 62) for respectively connecting to an electrical appliance (e.g. 10) and an electrical supply (27), contact elements (31) extending between the base portion (21) and cover portion (22) when the cover portion (22) is fitted to the base portion (21), and an actuator (24) for selectively making or breaking an electrical connection between the terminal (35) in the base portion and the terminal (62) in the cover portion (22) via said elements (31).

**2)** A switch as claimed in claim 1 characterised by means (26) for concealing the contact elements (31) inside the base portion (21) or inside cover portion (22) when said two portions are separated.

**3)** A switch as claimed in claims 1 or 2 characterised in that the actuator (24) is arranged to disconnect the contact elements (31) from the terminals (62) in the cover portion (22) when said two portions (21, 22) are separated.

**4)** A switch as claimed in any preceding claim characterised by means (31) for mechanically locking the cover portion (22) to the base portion (21) when said electrical connection is made between the terminals (35) in the base portion (21) and the terminals (62) in the cover portion (22).

**5)** A switch as claimed in any preceding claim characterised in that the contact elements (31) are movable by the actuator (24) between an inactive position and an active position in which they interconnect the terminals (35) in the base portion (21) and the terminals (62) in the cover portion.

**6)** A switch as claimed in claim 5 characterised in that the contact elements (31) comprise arms pivotally mounted to the base portion (21) and arranged to extend from the base portion (21) when in their active position.

**7)** A switch as claimed in any preceding claim characterised in that the cover portion (22) is provided with a spring loaded flap (26) which conceals the terminals (62) in the cover portion (21) when it is separated from the base portion (21).

**8)** A switch as claimed in any preceding claim characterised in that the base portion (21) is provided with a spring-loaded flap (25) which conceals the terminals (35) in the base portion (21) when the cover portion (22) is removed.

**9)** A motor having a terminal box (16) on its casing (15) characterised by an enclosure (70) for housing a local isolator or other electrical device being mounted on the terminal box (16).

**10)** A motor as claimed in claim 9 characterised in that the enclosure (70) is mounted on the terminal box (16) by screws which engage with screw-threaded bores formed in the terminal box (16).

**11)** A motor as claimed in claims 9 or 10 characterised in that the enclosure (70) has a base portion (71) provided with a panel (78) which can be removed or knocked out.

**12)** A motor as claimed in any of claims 9 to 11 characterised in that the enclosure (17) comprises a removable cover portion (72).

**13)** A motor as claimed in any of claims 9 to 13 characterised in that an aperture (79) is formed in the enclosure (70) to provide a cable entry port.
